# EUROPEAN PATENT APPLICATION

(11) **EP 2 051 064 A1**
(43) Date of publication of application: **22.04.2009**
(21) Application number: 07745287.8
(22) Date of filing: 14.06.2007
(51) Int. Cl.: G01N 21/93, G01B 11/30, G01N 21/956, H01L 21/66

(54) **CALIBRATION METHOD FOR END PORTION INSPECTING DEVICE**

(30) Priority: 27.06.2006 JP 2006176298
(71) Applicant: Raytex Corporation, Tokyo 206-0033 (JP)
(72) Inventor: HIRAMOTO, Kazuyuki, Tama-shi, Tokyo 206-0033 (JP); IWASAKI, Tsuyoshi, Tama-shi, Tokyo 206-0033 (JP)
(74) Representative: Ilgart, Jean-Christophe
(86) International application number: PCT/JP2007/062030
(87) International publication number: WO 2008/001621

(57) **Abstract**

A calibration method for an edge inspection apparatus which is provided with: a light emitting portion which irradiates inspection light onto an edge of a substrate being inspected; and a detection portion which detects optical characteristics of reflection light which is reflected by the edge of the substrate being inspected to detect the defect occurring in the edge of the substrate being inspected based on the optical characteristics of the reflected light detected by the detection portion, wherein the calibration method including: a pseudo-defect formation step of forming a plurality of pseudo-defects on an edge of a substrate for calibration which serves as a reference along a circumferential direction thereof, in which at least one of a position in the thickness direction of the substrate, the shape, and the size is set so as to be different between the pseudo-defects; a detection step of irradiating the inspection light onto the respective pseudo-defects, and detecting the optical characteristics of the reflection light by the detection portion; and an adjustment step of calibrating the edge inspection apparatus based on the optical characteristics of the reflection light detected from the respective pseudo-defects.

## Description

### TECHNICAL FIELD

The present invention relates to a calibration method for an edge inspection apparatus which optically inspects an edge of a substrate.
Priority is claimed on Japanese Patent Application No. 2006-176298, filed June 27, 2006, the contents of which are incorporated herein by reference.

### BACKGROUND ART OF THE INVENTION

In a substrate such as a silicon wafer, defects such as thin, elongated edge cracks, failures, or polishing scratches formed in outer peripheral edge portions affect the quality of the substrate such as by reducing the strength thereof. Because of this, in a process to manufacture a substrate, inspections are performed in order to check whether or not the aforementioned types of defect have been formed in the substrate. An edge inspection apparatus which performs such inspections has been proposed in which, for example, an optical absorption component is placed on a mirror surface of an elliptical mirror, and low-dimensional diffracted light, which is regularly reflected light, is absorbed by the optical absorption component, while only high-dimensional diffracted light which is irregularly reflected by defects in the edge is detected by a light detection portion provided at the second focal point position (see, for example, Patent document 1). In this type of edge inspection apparatus, if a defect is formed in an edge of a substrate, the inspection light irradiated onto the edge of the substrate is irregularly reflected, and is detected by a light detection portion. Because of this, , it is possible using the light detection portion to detect the presence or otherwise of a defect in the edge of the substrate based on the intensity of the high-dimensional diffraction light which has been irregularly reflected.
Moreover, an edge inspection apparatus has been proposed which has a photographic apparatus which photographs an edge of a substrate, and then recognizes defects formed in the edge from the acquired image data, and then evaluates the size and position of the recognized defects.
Patent document 1: Japanese Unexamined Patent Application, First Publication No. 2003-287412

### DETAILED DESCRIPTION OF THE INVENTION

### Problems to be solved by the invention

However, according to the edge inspection apparatus described in Patent document 1, the intensity of diffraction light which is generated by irregular reflection caused by a defect formed in an edge differs in accordance not only with the position, shape, and sizes of the defect, but also with the intensity of the inspection light emitted from a light emitting source, the orientation of the optical axis, and the focal point position.
In the same way, if the installation position of the detection portion is shifted, then there is a change in the intensity of the detected reflection light. Because of this, in order to obtain stable detection results, it has been necessary to periodically calibrate those characteristic values which have an effect on the intensity detected in the light emitting portion and light detecting portion and the like, and to keep those inspection conditions constant.
Moreover, because the shape and sizes of defects being recognized differ depending on the type of substrate, if the type of substrate is altered, then in order to accurately recognize corresponding defects, it has been necessary to calibrate characteristic values such as the intensity of the inspection light emitted from the light emitting portion and the sensitivity of the detection portion, and thereby provide the optimum detection conditions.
Moreover, the same thing applies to edge inspection apparatuses which evaluate scratches formed in an edge based on image data, and it has been necessary to calibrate characteristic values which have an effect on image data such as the intensity of the illumination, the orientation of the optical axis of the photographic apparatus, the installation position and focal point position, and the like.

This invention was conceived in view of the above described circumstances, and it is an object thereof to provide a calibration method for an edge inspection apparatus which makes it possible for an edge inspection apparatus which optically inspects an edge of a substrate to perform an inspection under optimum and uniform inspection conditions.

### Means for solving the problem

In order to solve the above described problems, the present invention employs the following.
Namely, a calibration method for an edge inspection apparatus according to the present invention is a calibration method for an edge inspection apparatus which is provided with: a light emitting portion which irradiates inspection light onto an edge of a substrate being inspected; and a detection portion which detects optical characteristics of reflection light which is reflected by the edge of the substrate being inspected to detect the defect occurring in the edge of the substrate being inspected based on the optical characteristics of the reflected light detected by the detection portion, the calibration method including: a pseudo-defect formation step of forming a plurality of pseudo-defects on an edge of a substrate for calibration which serves as a reference along a circumferential direction thereof, in which at least one of a position in the thickness direction of the substrate, the shape, and the size is set so as to be different between the pseudo-defects; a detection step of irradiating the inspection light onto the respective pseudo-defects, and detecting the optical characteristics of the reflection light by the detection portion; and an adjustment step of calibrating the edge inspection apparatus based on the optical characteristics of the reflection light detected from the respective pseudo-defects.

According to the above-described calibration method for an edge inspection apparatus, in the detection step, inspection light is irradiated from the light emitting portion onto each one of a plurality of pseudo-defects, and the optical characteristics of the reflection light therefrom are detected by the detection portion. As a result, a plurality of detection results which correspond to changes in the position in the thickness direction, the shape, and the size of the pseudo-defects are obtained. In addition, in the adjustment step, relationships are ascertained between these pseudo-defects and the optical characteristics of the reflection light therefrom which are the detection results corresponding to these pseudo-defects. By then comparing the detection results with predetermined values, the edge inspection apparatus can be calibrated. At this time, if each pseudo defect is formed in the pseudo-defect formation step so as to have a predetermined position in the thickness direction, shape, and sizes, then it is possible to calibrate the edge inspection apparatus under constantly uniform conditions. Moreover, if calibrations are performed using pseudo-defects in which the various conditions, namely, the position in the thickness direction, the shape, and the sizes have been changed, then it is possible to set the optimum inspection conditions for a variety of defects which actually occur in an edge of a substrate being inspected and which have different conditions such as those described above. As a result, it is possible to obtain consistent detection results.

It may be arranged such that in the pseudo-defect formation step, the pseudo-defects are formed so as to have the same shape and size, and the pseudo-defects are at a center position in the thickness direction and positions offset from the center in both directions with respect to the thickness direction by predetermined amounts.

In this case, in the pseudo-defect formation step, since a plurality of pseudo-defects which are located at different positions in the thickness direction are formed, it is possible in the adjustment step to compare these detection results with predetermined values and accordingly perform calibrations even for the case where the position of the respective pseudo-defects in the thickness direction changes. As a result, it is possible to adjust the characteristic values in the thickness direction of the edge inspection apparatus, for example, it is possible to adjust any shift in the installations positions of the light emitting portion or the detection portion in the thickness direction, or any shift in the orientation of the optical axes thereof. At this time, the respective pseudo-defects are displaced by a uniform displacement amount on both sides of a reference which is the center in the thickness direction. By placing them in these positions, it is possible to quantitatively evaluate the characteristic values in the thickness direction of the edge inspection apparatus taking this center as a reference.

It may be arranged such that in the pseudo-defect formation step, the pseudo-defects are formed so as to have the same position in the thickness direction, the same shape, and sizes which are sequentially varied by a predetermined amount or ratio.

In this case, in the pseudo-defect formation step, since a plurality of pseudo-defects which have different sizes are formed, calibrations can be performed by comparing the detection results when the sizes of the respective pseudo-defects are changed by predetermined values. As a result, it is possible to calibrate the edge inspection apparatus such that uniform detection results are obtained for pseudo-defects having predetermined sizes. At this time, if the respective pseudo-defects are set such that their sizes are varied by a predetermined amount or ratio, it is possible to quantitatively evaluate the relationship between the characteristic values of the edge inspection apparatus and the sizes of the respective pseudo-defects.

It may be arranged such that the detection portion of the edge inspection apparatus is a light sensor which detects an intensity of the reflection light as the optical characteristic, and in the adjustment step, the characteristic values of the light emitting portion and the detection portion which have an effect on the intensity of the reflection light are adjusted by comparing the intensity of the reflection light in each of the pseudo-defects detected in the detection step with predetermined values.

In this case, in the detection step, inspection light is irradiated onto and reflected by each pseudo-defect, and the intensity of the reflected light is detected by a light sensor serving as the detection portion. Moreover, in the adjustment step, by comparing the intensity of the reflection light from the respective pseudo-defects in which at least one of the position in the thickness direction, the shape, and the sizes are different between the pseudo-defects by predetermined values, it is possible to adjust the characteristic values (for example, the installation position of the light emitting portion, the orientation of the optical axis, the intensity of the emitted inspection light, or the focal point position) of the light emitting portion and the detection portion which have an effect on the intensity of the detected reflection light, as well as the installation position and sensitivity and the like of the detection portion, and then calibrate the edge inspection apparatus. As a result, when a pseudo-defect having predetermined conditions is present, it is possible to detect a predetermined reflection light intensity which corresponds to the pseudo-defect. Namely, it is possible to accurately detect a defect occurring in an edge of a substrate being inspected based on the intensity of the detected reflection light.

It may be arranged such that the detection portion of the edge inspection apparatus is a camera which photographs the edge of the substrate using the inspection light emitted from the light emitting source as illumination light, and in the adjustment step, the characteristic values of the light emitting portion and the detection portion which have an effect on acquired image data are adjusted by mutually comparing with each other the number of pixels of portions where the respective pseudo-defects are formed in image data photographed in the detection step by the detection portion.

In this case, in the detection step, inspection light is irradiated onto each pseudo-defect, and the edge of the calibration substrate in which a defect is formed is photographed using a camera as the detection portion to acquire image data. Moreover, in the adjustment step, the number of pixels of those portions recognized as pseudo-defects in image data which includes the respective pseudo-defects in which at least one of the position in the thickness direction, the shape, and the sizes are different between the pseudo-defects are mutually compared with each other, and the characteristic values (for example, the intensity of the inspection light from the light emitting portion) of the light emitting portion and the detection portion which have an effect on the acquired image data, as well as the orientation of the optical axis, the focal point position, and the installation position of the detection portion are adjusted, and the edge inspection apparatus is then calibrated. As a result, a pseudo-defect having predetermined conditions can be detected by means of the corresponding number of pixels. Namely, it is possible to accurately detect a defect occurring in an edge of a substrate being inspected based on the number of pixels of a portion recognized as being a defect.

It may be arranged such that in the adjustment step, a reference value for a pass or fail determination for the edge of the substrate being inspected is decided based on the optical characteristics of the reflection light in the respective pseudo-defects detected in the detection step.

In this case, in the detection step, the optical characteristics of the reflection light from pseudo-defects in which at least one of the position in the thickness direction, the shape, and the sizes are different between the pseudo-defects are detected. In the adjustment step, by comparing the optical characteristics of the reflection light from each pseudo-defect with predetermined values, it is possible to quantitatively evaluate the relationships between the position in the thickness direction, the shape, and the sizes of the respective pseudo-defects and the optical characteristics of the reflection light. As a result, if a reference value for the optical characteristics of the reflection light which sets the standard for a pass or fail determination is fixed based on these relationships and on the required detection accuracy, then, based on this reference value, it is possible to also accurately detect defects in which the position in the thickness direction, the shape, or the sizes exceed the reference value.

### Advantageous effects of the invention

According to the present invention, since a plurality of pseudo-defects having various conditions in a defect formation step are formed, these defects are detected in a detection step, and then an edge inspection apparatus is calibrated in an adjustment step based on the detection results therefrom, it is possible to calibrate the edge inspection apparatus such that it can consistently perform inspections under the optimum and uniform inspection conditions.

### BRIEF DESCRIPTION OF THE DRAWINGS

[FIG. 1] FIG. 1 is a side cross-sectional view of an edge inspection apparatus in which a first embodiment of the calibration method for an edge inspection apparatus of the present invention is applied.
[FIG. 2] FIG. 2 is a plan cross-sectional view of the edge inspection apparatus.
[FIG. 3] FIG. 3 is a flowchart showing a calibration method of the embodiment.
[FIG. 4] FIG. 4 is an enlarged cross-sectional view of an edge of a substrate for calibration of the embodiment.
[FIG. 5] FIG. 5 is a front view showing an enlargement of a portion of the substrate for calibration.
[FIG. 6] FIG. 6 is an explanatory view showing a case in which coherent light is irradiated onto the substrate for calibration.
[FIG. 7] FIG. 7 is an explanatory view showing a case in which coherent light is irradiated onto the substrate for calibration.
[FIG. 8] FIG. 8 is an explanatory view showing a case in which coherent light is irradiated onto the substrate for calibration.
[FIG. 9] FIG. 9 is a graph showing a relationship between a pseudo defect in the embodiment and the intensity of the detected reflected light.
[FIG. 10] FIG. 10 is a side cross-sectional view of an edge inspection apparatus in which a second embodiment of the calibration method for an edge inspection apparatus of the present invention is applied.
[FIG. 11A] FIG. 11A is an explanatory view showing a photographed image in the embodiment.
[FIG. 11B] FIG. 11B is an explanatory view showing a photographed image in the embodiment.
[FIG. 12A] FIG. 12A is an explanatory view showing a photographed image in the embodiment.
[FIG. 12B] FIG. 12B is an explanatory view showing a photographed image in the embodiment.

### Description of the reference symbols

- 1, 20: Edge inspection apparatus
- 3: Light emitting portion
- 4: Light sensor (Detection portion)
- 21, 22: Camera (Detection portion)
- 23: .Illumination light source (Light emitting portion)
- E: Image data
- F: Pseudo-defect
- M: Substrate for calibration
- M1: Edge
- M10: Center
- N: Displacement amount
- S: Circumferential direction
- S 1: Pseudo-defect formation step
- S2: Detection step
- S3: Adjustment step
- T: Thickness direction
- W: Substrate for inspection
- W1: Edge
- C: Coherent light (detection light)

### BEST MODE FOR CARRYING OUT THE INVENTION

### (First embodiment)

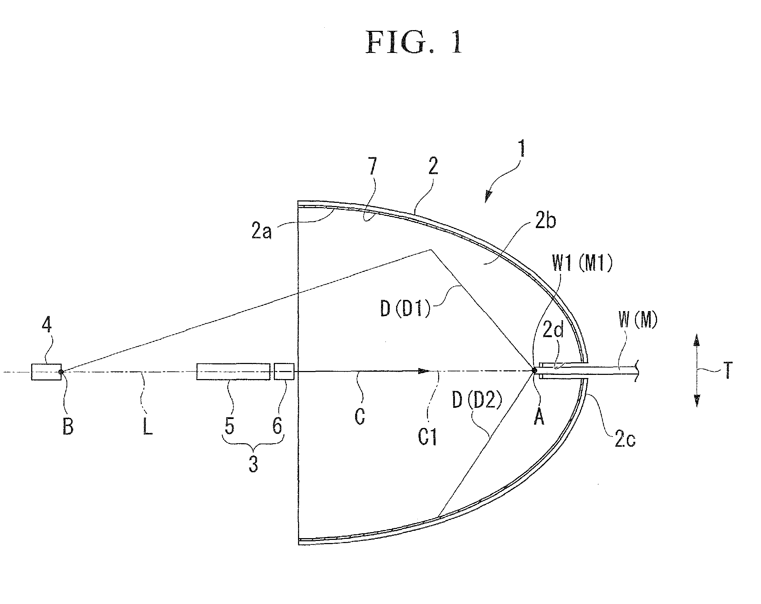

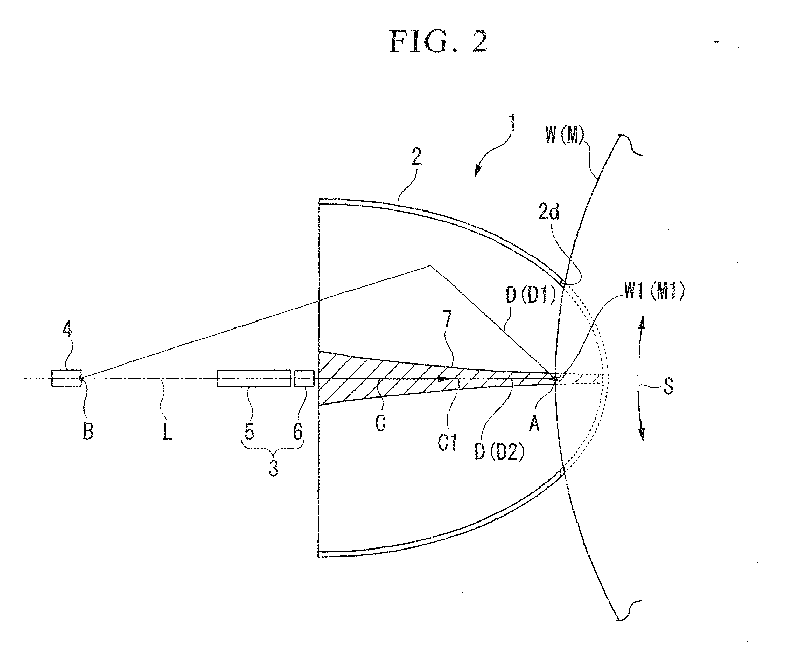

FIGS. 1 through 9 show a first embodiment of the calibration method for an edge inspection apparatus of the present invention.
Firstly, based on FIG. 1 and FIG. 2, an edge inspection apparatus 1 of the present embodiment will be described. As is shown in FIG. 1 and FIG. 2, the edge inspection apparatus 1 is an apparatus which checks whether or not defects are present in an edge W1 of a substrate for inspection W (for example, a substantially circular plate-shaped silicon wafer or semiconductor wafer or the like), and is provided with an elliptical mirror 2, a light emitting portion 3, and a light sensor 4 which is a detection portion.
The elliptical mirror 2 has a mirror surface 2b on an inner side 2a thereof, and a notch 2d through which a substrate for inspection W can be inserted is formed in an apex portion 2c. The substrate for inspection W is fixed by means of a supporting base (not shown) so as to be able to rotate in a circumferential direction S of the substrate for inspection W, and is positioned such that the edge W1 is positioned on a first focal point position A of the elliptical mirror 2.

The light emitting portion 3 is provided with a light source 5 which emits coherent light C which is inspection light, and a light converging device 6 which performs optical actions on the irradiated coherent light C. The light source 5 emits, for example, laser light, and more specifically is a He-Ne laser or a semiconductor laser. The light converging device 6 is a lens which narrows down the irradiation range of the coherent light C. The light emitting portion 3 of the present embodiment is adjusted so as to irradiate light onto the edge W1 which is placed in the first focal point position A, and, in particular, is adjusted such that an optical axis C1 thereof matches a longitudinal axis L of the elliptical mirror 2. The light converging device 6 narrows down the coherent light C emitted from the light source 5. As a result, it is set so as to impart to the edge W1 of the substrate for inspection W an irradiation range which has been elongated in a thickness direction T and shortened in the circumferential direction S.

The light sensor 4 detects the intensity of reflected light D which is obtained when the coherent light C emitted from the light emitting portion 3 is reflected by the edge W1 of the substrate for inspection W as an optical characteristic of the reflected light D, and is formed, for example, by a photodiode or the like. The light sensor 4 of the present embodiment is adjusted so as to be able to detect the reflected light D which is reflected by the elliptical mirror 2 and is condensed on a second focal point position B of the elliptical mirror 2. In addition, a light blocking device 7 in the form of adhesive masking tape having a predetermined width is provided on an intersecting line where the elliptical mirror 2 intersects with a surface on the inner side 2a of the elliptical mirror 2 which is parallel with the thickness direction T of the substrate for inspection W including the optical axis L. Of the reflected light D which is reflected by the edge W1 of the substrate for inspection W, the reflected light D which reaches the light blocking device 7 is reflected and does not reach the light sensor 4, and is absorbed by the light blocking device 7.

Namely, in the edge inspection apparatus 1 which is shown in FIGS. 1 and 2, in a normal state in which no defects are present in the edge W1 of the substrate for inspection W, the coherent light C which is emitted from the light emitting portion 3 is regularly reflected by the edge W1 located at the first focal point position A. Because of this, if this reflected light D is taken as low-dimensional diffracted light D1, because the majority thereof becomes absorbed by the light blocking device 7, it is not detected by the light sensor 4. In contrast, if a defect is present in the edge W1 of the substrate for inspection W, the coherent light C is irregularly reflected by the defect. Namely, this reflected light D is reflected by the mirror surface 2b of the elliptical mirror 2 as high-dimensional diffracted light D2, and arrives at the second focal point position B where it is detected by the light sensor 4. Accordingly, according to the edge inspection apparatus 1 of the present embodiment, it is possible to detect the presence or otherwise of a defect, and also characteristic values of that defect, namely, the position in the thickness direction on the substrate for inspection W, the shape, and the sizes and the like thereof by means of the intensity of the reflected light D detected by the light sensor 4.

The intensity of the reflected light D detected by the light sensor 4 depends not only on the characteristic values of the defect, but also on characteristic values of the light emitting portion 3 and the light sensor 4 which make up the edge inspection apparatus 1. Namely, in the light emitting portion 3, if there is a change in the installation position of the light source 5, the orientation of the optical axis C1, the intensity of the emitted coherent light C, or the converging position of the light converging device 6, there is also a change in the intensity of the reflected light D detected by the light sensor 4. In addition, there is also a change in the intensity of the reflected light D detected by the light sensor 4 if the installation position of the optical sensor 4 relative to the second focal point position B is shifted. Furthermore, the upper limit value of the intensity of the detected reflected light D as well as the accuracy vary depending on the sensitivity of the optical sensor 4, so that it may become impossible to accurately measure this intensity. Because of this, in the edge inspection apparatus 1, in order to accurately detect the presence or otherwise of defects in the edge W1 of the substrate for inspection W as well as the characteristic values thereof, it is necessary to perform calibrations such that characteristic values of the component elements, namely, the light emitting portion 3 and the light sensor 4 are constantly at an optimum and provide uniform conditions. Hereinafter, a detailed description will be given of a method of calibrating the light emitting portion 3 and the light sensor 4 of the edge inspection apparatus 1.

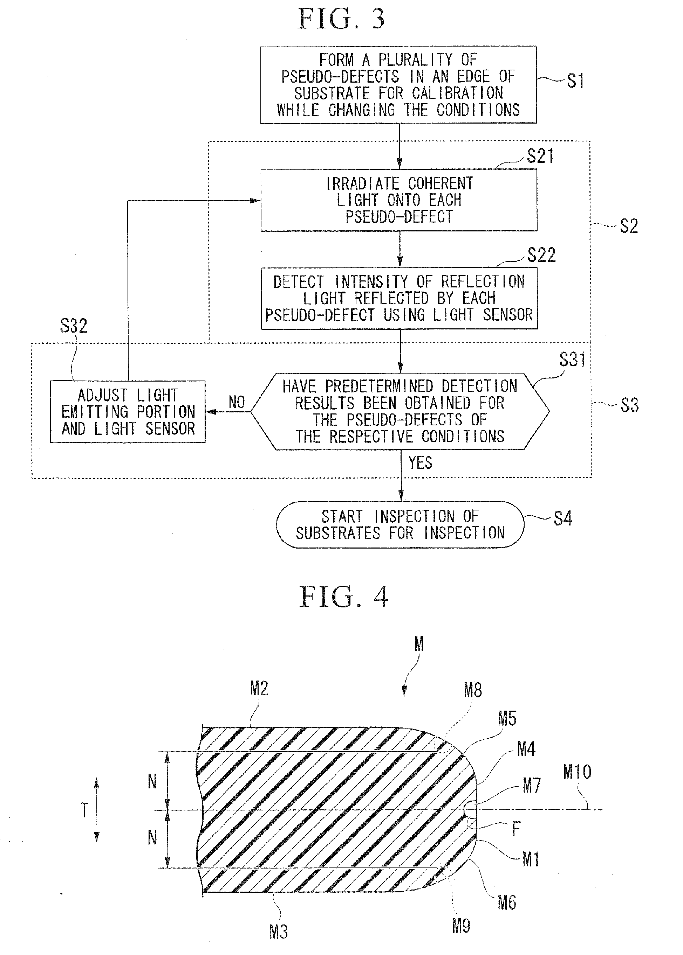

FIG. 3 is a flow chart showing the respective steps to calibrate the edge inspection apparatus 1. As is shown in FIG. 3, firstly, in a pseudo-defect formation step S1, a predetermined pseudo-defect F is formed on a substrate for calibration M which has been prepared in advance.
The substrate for calibration M is preferably a substantially circular plate-shaped component which has the same thickness as the substrate for inspection W which is being examined, and is preferably formed from the same material as the substrate for inspection W. Moreover, preferably, the same edge treatment has been implemented thereon as the edge treatment implemented on the edge W1 of the substrate for inspection W. Namely, as is shown in FIG. 4, in an edge M1 of a substrate for calibration M which has already undergone edge treatment, a cross-sectional configuration thereof has a top surface M2 and bottom surface M3 and an end surface M4 which is substantially orthogonal to these, and a top bevel M5 and bottom bevel M6 which are formed in substantially circular arc shapes extending from the end surface M4 up and down respectively towards the top surface M2 and the bottom surface M3. The cross-sectional configuration of the substrate for calibration M is substantially symmetrical in the thickness direction T.

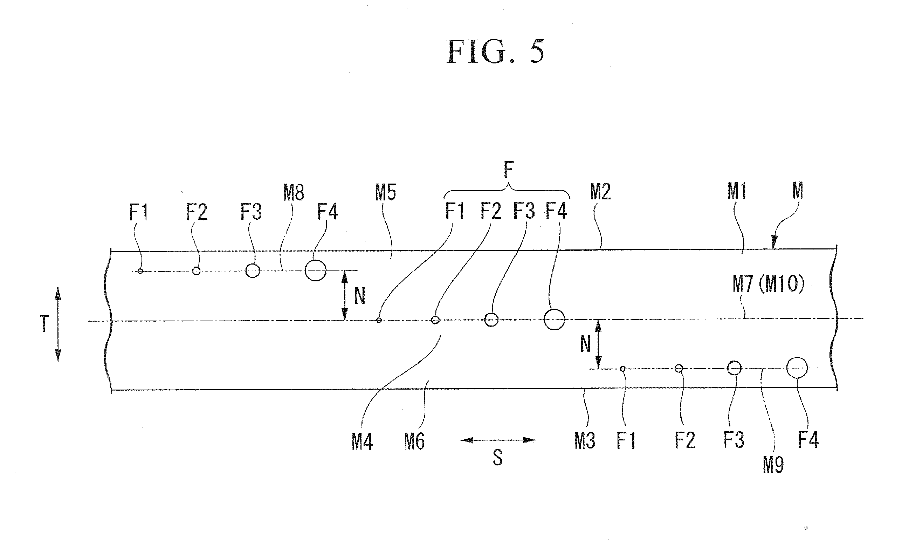

The pseudo-defect F is a recessed portion having a substantially circular shape when seen in front view, and is formed by laser processing in which a YAG laser or carbon dioxide gas laser is irradiated onto the edge M1 of the substrate for calibration M. As is shown in FIG. 5, in the present embodiment, pseudo-defects F1, F2, F3, and F4 having different diametric sizes of 30 µm, 50 µm, 70 µm, and 90 µm respectively which are obtained by varying the diameter in each one by 20 µm are formed by adjusting the output of the laser processing. Furthermore, these pseudo-defects F1, F2, F3, and F4 are formed on the edge M1 of the substrate for calibration M at a position M7 which coincides with the center in the thickness direction T thereof, and at positions M8 and M9 which are offset above and below the position M7 by a predetermined displacement amount N so as to form a total of 12 pseudo-defects. Moreover, taking a notch (not shown) which is formed in the edge M1 as a reference, these pseudo-defects F are spaced at equal angular intervals relative to each other in the circumferential direction S. Note that the method used to form the pseudo-defects F is not limited to the above described laser processing and, for example, holes may also be formed using an ultrasonic drill. Moreover, the above described sizes are merely examples thereof and the sizes may be selected to suit the circumstances.

Next, a detection step S2 shown in FIG. 3 is performed. Firstly, as is shown in FIG. 1, the substrate for calibration M is fixed to a supporting base (not shown) so that the edge M1 is placed at the first focal point position A. Next, the substrate for calibration M is rotated in the circumferential direction S such that an arbitrary one of the pseudo-defects F formed on the edge M1 is positioned at the first focal point position A. Coherent light C is then irradiated from the light emitting portion 3 towards the first focal point position A (step S21), and the intensity of the reflected light D therefrom is detected by the light sensor 4 (step S22). This process is repeated for each of the pseudo-defects F1, F2, F3, and F4 at each of the positions M7, M8, and M9, so that the intensities of the corresponding reflected lights D for each of the pseudo-defects having different sizes and positions in the thickness direction T are acquired as detection results.

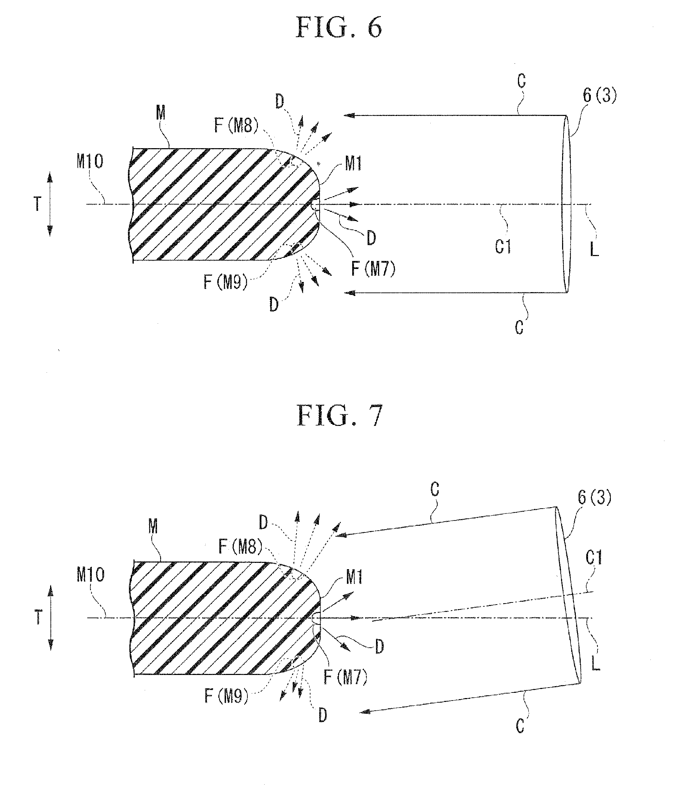

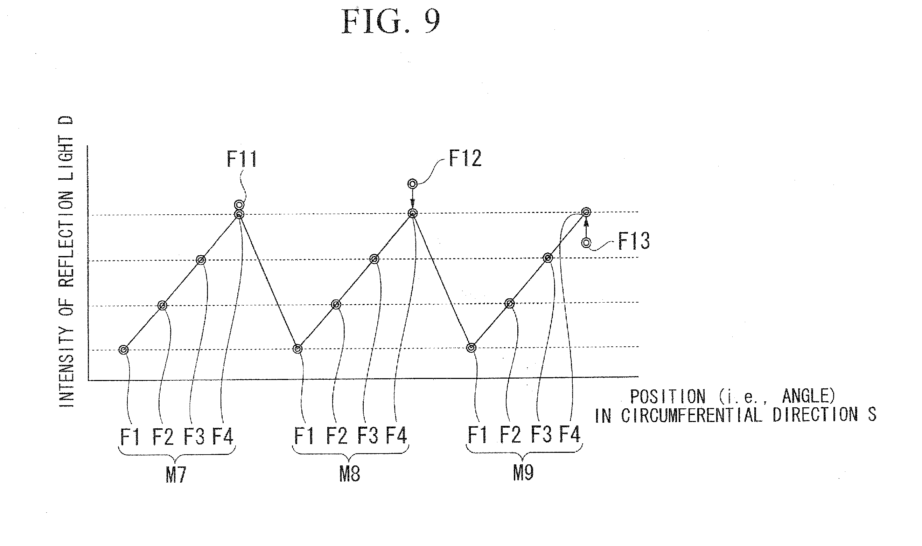

At this time, as is shown in FIG. 6, the optical axis C1 of the light emitting portion 3 matches the longitudinal axis L of the elliptical mirror 2, namely, matches the center M10 of the substrate for calibration M, and the coherent light C can be irradiated onto the edge M1 over the entire thickness direction T. Under these conditions (referred to below as reference conditions), if the sizes and shape of the pseudo-defects F are equal, then even though the positions M7, M8, and M9 where the pseudo-defects F are formed are different, the coherent light C is irregularly reflected at a substantially uniform intensity by each of the pseudo-defects F. Because of this, as is shown in FIG. 9, irrespective of the position in the thickness direction T, if the shape and sizes of the pseudo-defects F are equal, then the intensities of the reflected light D detected by the light sensor 4 show substantially equal values. In contrast, if the orientation of the optical axis C1 of the light emitting portion 3 is shifted in the thickness direction T, or if the installation position of the light emitting portion 3 is shifted in the thickness direction T, the irradiation position on the edge M1 of the substrate for calibration M is shifted in the thickness direction T, so that there is a difference in the detected intensity.

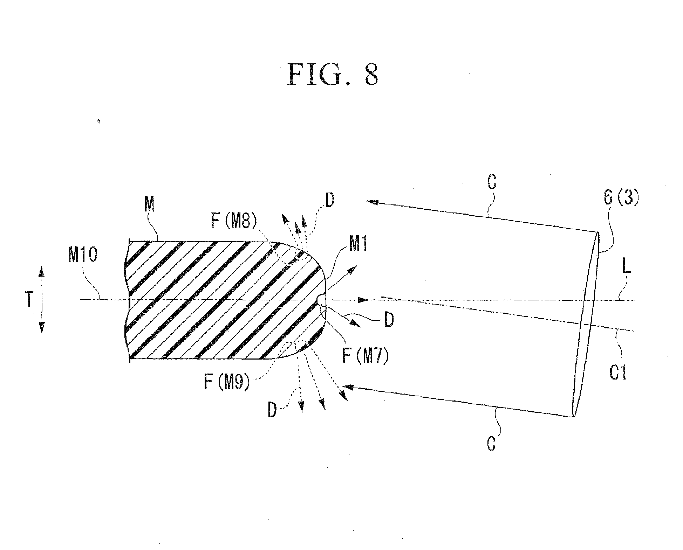

In the description given below, the reference value indicates the intensity of reflected light obtained under the above described predetermined conditions. For example, as is shown in FIG. 7, if the orientation of the optical axis C1 is shifted so that the coherent light C is irradiated from above the thickness direction T, then high intensity reflected light D in comparison with the reference value is detected from the pseudo-defect F formed at the position M8 above the center M10 (i.e., shown by the symbol F 12 in FIG. 9). In contrast, low intensity reflected light D in comparison with the reference value is detected from the pseudo-defect F formed at the position M9 below the center M10 (shown by the symbol F13 shown in FIG. 9). Moreover, as is shown in FIG. 8, the same applies when the coherent light C is irradiated from below the thickness direction T and low intensity reflected light D in comparison with the reference value is detected from the pseudo-defect F formed at the position M8 above the center M10, while high intensity reflected light D in comparison with the reference value is detected from the pseudo-defect F formed at the position M9 below the center M10.
Furthermore, if the focal point position of the converging device 6 of the light emitting portion 3 is shifted, different detection results are obtained even if the coherent light C is only irradiated onto a portion of the thickness direction T of the edge M1. If the light sensor 4 is shifted from the second focal point position B, then in this case as well, the detection results differ depending on whether the installation position is shifted from the second focal point position B to above or below the thickness direction T.

Namely, as is shown in FIG. 3, in an adjustment step S3, firstly, as is described above, a comparison of the intensities of the reflected lights D detected from each of the pseudo-defects F is made. Next, as is shown in FIG. 9, for example, at each of the positions M7, M8, and M9, it will be assumed that the intensities of the reflected light D detected from the pseudo-defects F4 having substantially the same shape and sizes are F11, F12, and F13 which are different from a predetermined value. In this case, a comparison is made between these detection results and a predetermined value (step is 31), and it is found that substantially equal results have not been obtained. Accordingly, the characteristic values in the thickness direction T of the light emitting portion 3 and the light sensor 4, namely, the installation position of the light source 5 in the thickness direction T, the orientation of the optical axis C1, and the focal point position of the converging device 6 in the light emitting portion 3, as well as the installation position in the thickness direction T and the like in the light sensor 4 are adjusted. Next, the detection step S2 and the adjustment step S3 are repeated. Namely, in the same way, the detection results from pseudo-defects F which have substantially the same shape and sizes and are at different positions in the thickness direction T are compared with predetermined values and are adjusted. This is repeated so that, when detection results which are substantially the same as the predetermined values are obtained from the respective pseudo-defects F which have substantially the same shape and sizes irrespective of their position in the thickness direction T, then it is determined that the calibration is complete, and inspection of a substrate for an inspection W is begun (step S4).

In this manner, by comparing the detection results from the pseudo-defects F which have different positions in the thickness direction T with predetermined values, it is possible to adjust any shift in values representing characteristics in the thickness direction T of the edge inspection apparatus 1 such as the orientation of the optical axis C1 of the light source 5 in the light emitting portion 3, the focal point position of the converging device 6, and the installation position of the light sensor 4, and the like, and perform calibrations such that uniform detection results are obtained. At this time, by setting the pseudo-defects F such that they are displaced by a uniform displacement amount N on both sides when the center M10 of the thickness direction T is taken as a reference, the characteristic values in the thickness direction T of the edge inspection apparatus 1 can be quantitatively evaluated and adjusted using this center M10 as a reference. Note that, in the above description, three patterns are employed, namely, the position M7 which coincides with the center M10, and the positions M8 and M9 on both sides thereof, however, by more precisely discriminating between the positions where the pseudo-defects F are formed in the thickness direction T, it is possible to evaluate and adjust the detection results more accurately.

Moreover, in the above description, a case is described in which detection results from pseudo-defects F at different positions in the thickness direction T are compared with predetermined values, and the characteristic values in the thickness direction T of the edge inspection apparatus 1 are adjusted, however, the present invention is not limited to this. For example, as is shown in FIG. 5 and FIG. 9, in a step S31 of the adjustment step S3, it is also possible to compare detection results from the pseudo-defects F1, F2, F3, and F4 which have the same position in the thickness direction T and the same shape but have different sizes with predetermined values. In this case, it is possible to compare the difference between the predetermined values and the detection results detected when the sizes of the pseudo-defects F are varied, and calibrate the edge inspection apparatus 1 such that uniform detection results are obtained from the pseudo-defects F having predetermined sizes. At this time, if these pseudo-defects F are set such that the sizes are varied within a fixed amount (for example, 20 µm), then it becomes possible to quantitatively evaluate the relationship between the sizes of the pseudo-defects F and characteristic values which have an effect on the intensity of the reflection light D from the edge inspection apparatus 1. Moreover, if a mutual relationship between the sizes of the pseudo-defects F and the intensity of the detected reflection light D is obtained, then when a substrate for inspection W is actually being inspected, it is possible to confirm the size of a defect which is generated in the edge W1 of the substrate for inspection W from the intensity of the detected reflection light D. Moreover, if the size of defects being targeted has been determined in advance, then it is possible to adjust the sensitivity of the light sensor 4 so that it becomes possible to favorably measure the intensity of the corresponding reflection light D, and it also becomes possible to adjust the intensity of the coherent light C emitted from the light emitting portion 3. Note that in the present embodiment, the diameter is used as a representative parameter for the size, however, the depth may also be a representative parameter for the size.

Moreover, in the above description, the pseudo-defects F have substantially the same substantially circular configuration when seen in frontal view; however, the present invention is not limited to this. For example, a variety of shapes may be set as an elliptical shape or a narrow, elongated crack shape or the like. By providing the variety of shapes in this manner, and then comparing the relationships with the intensity of the reflection light D, it is possible to more precisely calibrate the edge inspection apparatus 1. Namely, by making calibrations using pseudo-defects F having a variety of conditions which are obtained by varying conditions such as the position in the thickness direction T, the shape, and the sizes, it is possible to set the optimum inspection conditions for a variety of defects created by different conditions which are actually occurring in the edge W1 of the substrate for inspection W. As a result, it is possible to obtain stable detection results. Moreover, for example, when a large number of substrates are being inspected simultaneously by a plurality of edge inspection apparatuses 1, it is possible to unify the inspection accuracy between the apparatuses and perform the inspection efficiently.

Furthermore, since relationships between the intensity of the reflection light D and the position in the thickness direction T, the shape, and the sizes of the pseudo-defects F can be quantitatively evaluated, if a reference value for the intensity of the reflection light D which sets the standard for a pass or fail determination is made based on these relationships and on the required detection accuracy, then, based on this reference value, it becomes possible to also accurately detect defects in which the position in the thickness direction T, the shape, or the sizes exceed a fixed reference.

### (Second embodiment)

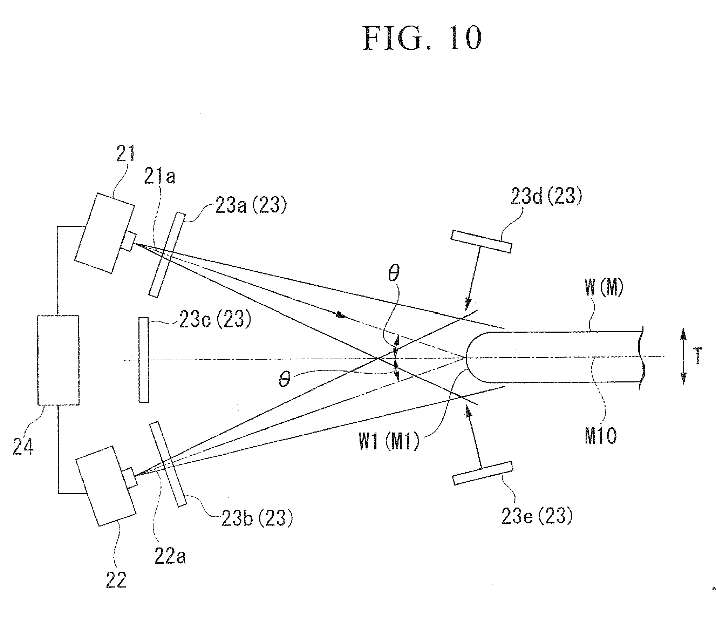

FIGS. 10 through 13 show a second embodiment of a calibration method for an edge inspection apparatus of the present invention. In this embodiment, the same symbols are used for components which are the same as those used in the above described first embodiment, and a description thereof is omitted.

As is shown in FIG. 10, an edge inspection apparatus 20 of this embodiment is provided with two cameras 21 and 22 which serve as a detection portion to detect defects in an edge W1 of the substrate for inspection W and photograph the edge W1, and a plurality of illumination light sources 23 (i.e., 23a, 23b, 23c, 23d, and 23e) which serve as light emitting portions and irradiate illumination light (i.e., inspection light) onto the edge W1 being photographed by the cameras 21 and 22. The two cameras 21 and 22 are provided such that their optical axes 21 a and 22a are tilted at substantially the same tilt angle θ downwards and upwards respectively when viewed from the side relative to the center axis 23 of the thickness direction T of the substrate for inspection W. This tilt angle θ can be selected to suit the circumstances. In the present embodiment, it is set at, for example, an angle of 35°. In addition, a photographic range is set for the edge W1 which enables the entire edge W1 in the thickness direction T thereof, or an overall image of the defects and the like extending in the circumferential direction S thereof to be viewed in enlargement. More specifically, the plurality of illumination light sources 23 are surface emission light sources formed from LEDs. In the present embodiment, there are a total of five illumination light sources 23, namely, first illumination light sources 23a and 23b whose emission directions are provided so as to coincide with the respective optical axes 21a and 22a in front of the respective cameras 21 and 22, a second illumination light source 23c which irradiates light onto a front surface of the edge W1 and whose irradiation direction coincides with the center axis 23 of the substrate for inspection W, and third illumination light sources 23d and 23e which illuminate the edge W1 of the substrate for inspection W from above and below. As a result, it becomes possible to eliminate the entire edge W1 of the substrate for inspection W with a uniform brightness. Note that the illumination method used by the illumination light sources 23 is not limited to surface emission light from LED, and the installation number and positions of the illumination light sources 23 can also be selected to suit the circumstances.

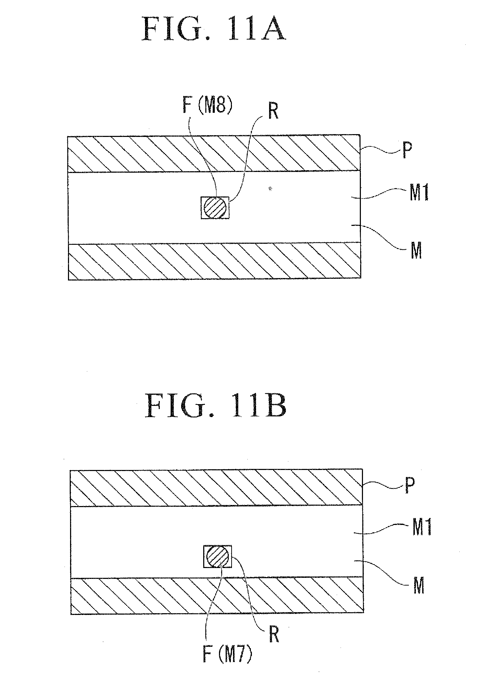

The cameras 21 and 22 are each connected to a control unit 24, and photographed images can be input as image data into the control unit 24. FIGS. 11A and 11B show, as an example, image data P which is obtained when an edge M1 of a substrate for calibration M is photographed by the camera 21 positioned above it and which is then input into the control unit 24. FIG. 11A shows the image data P when the pseudo-defect F4 (having a diameter of 90 µm) at the position M8 shown in FIG. 5 is photographed, while FIG. 11B shows the image data P when the pseudo-defect F4 (having a diameter of 90 µm) at the position M7 shown in FIG. 5 is photographed. Because the camera 21 takes photographs while being tilted upwards by the tilt angle θ (35°), the pseudo-defect F which is positioned at the position M8, namely, which is positioned towards the top in the thickness direction T of the substrate for calibration M can be confirmed substantially in the center of the image. On the other hand, the pseudo-defect F which is located at the position M7, namely, which is positioned in the center in the thickness direction T of the substrate for calibration M is confirmed towards the bottom of the image. Moreover, the pseudo-defect F which is located at the position M9, namely, which is positioned towards the bottom in the thickness direction T of the substrate for calibration M is not photographed.

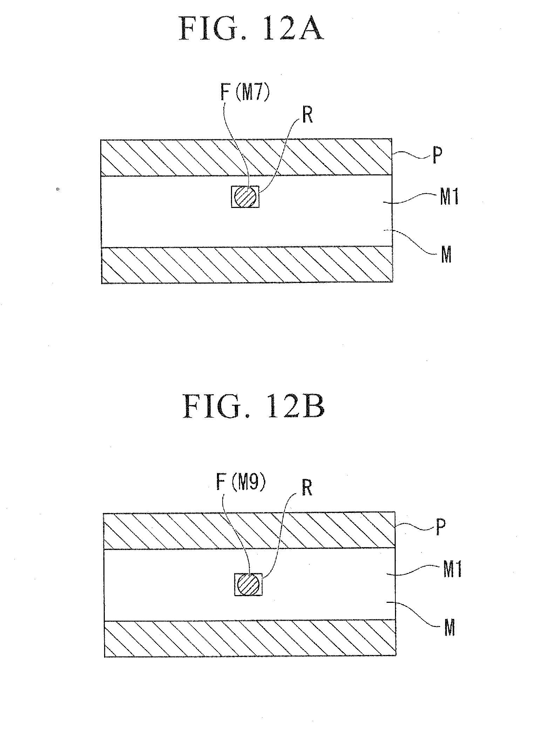

FIGS. 12A and 12B show, as an example, image data P which is obtained when photographs are taken by the camera 22 positioned below and which is then input into the control unit 24. FIG. 12A shows the image data P when the pseudo-defect F4 (having a diameter of 90 µm) at the position M7 shown in FIG. 5 is photographed, while FIG. 12B shows the image data P when the pseudo-defect F4 (having a diameter of 90 µm) at the position 9 shown in FIG. 5 is photographed. Because the camera 22 takes photographs while being tilted downwards by the tilt angle θ (35°), the pseudo-defect F which is positioned at the position M7, namely, which is positioned in the center in the thickness direction T of the substrate for calibration M can be confirmed substantially towards the top of the image. On the other hand, the pseudo-defect F which is located at the position M9, namely, which is positioned towards the bottom in the thickness direction T of the substrate for calibration M is confirmed substantially in the center of the image. Moreover, the pseudo-defect F which is located at the position M7, namely, which is positioned towards the top in the thickness direction T of the substrate for calibration M is not photographed.

In this edge inspection apparatus 20, because the edge M1 of the substrate for calibration M is photographed from above and below the using the two cameras 21 and 22, it is possible to suppress any distortion over the entire thickness direction T, and acquire an image having superior contrast, and to accurately ascertain the shape of a defect. In the present embodiment, by providing the plurality of illumination light sources 23 and, particularly, the first illumination light sources 23a and 23b which coincide with the optical axes 21 a and 22a of the cameras 21 and 22, it is possible to obtain an even more superior contrast. Moreover, because the cameras 21 and 22 are each tilted at substantially the same tilt angle θ, if the shape and sizes of a defect are the same, then in spite of the fact that the positions where the pseudo-defect F at the position M7 appears in the respective images are different, the pseudo-defect F is recognized as having the same shape and the same sizes. Moreover, the pseudo-defect F at the position M8 which is photographed by the camera 21 and the pseudo-defect F at the position M9 which is photographed by the camera 22 are recognized as having the same shape and sizes in the center position in the image. In addition, as is shown in FIG. 11A through FIG. 12B, as a result of the control unit 24 recognizing from the acquired image data P portions which have a different contrast from that of the edge W1 of the photographed substrate for inspection W, and then defining the range R thereof, and detecting the number of pixels in this range R, it is possible to detect the presence or otherwise of a defect, and to also detect the position in the thickness direction T, the shape, and the sizes of a defect.

In this type of edge inspection apparatus 20, if there is a shift in the respective installation positions of the cameras 21 and 22 or in the orientation of the respective optical axes 21 a and 22a, then a shape which is different from the actual shape is output in the photographed image. In addition, because of the sensitivity of the cameras 21 and 22 and the intensity of the illumination light of the illumination light source 23, it may not be possible to detect a defect from its contrast with its surroundings. However, in the same way, in this embodiment as well, a substrate for calibration M such as that shown in FIG. 5 is prepared in the pseudo-defect formation step S1, photography of each pseudo-defect F is performed in the detection step S2, and the number of pixels which correspond with the pseudo-defects F are detected from the acquired image data P. In addition, for example, as is shown in FIG. 11 and FIG. 12, the numbers of pixels of the pseudo-defects F which have been displaced by a fixed displacement amount N both above and below the center M10 are compared with each other in the adjustment step S3. More specifically, the pseudo-defect F which is photographed at the position M7 by the camera 21 positioned above it (see FIG. 11B) is compared with the pseudo-defect F having the same shape and sizes which is photographed at the position M7 by the camera 22 positioned below it (see FIG. 12A). Alternatively, the pseudo-defect F which is photographed at the position M8 by the camera 21 positioned above it (see FIG. 11A) is compared with the pseudo-defect F having the same shape and sizes which is photographed at the position M9 by the camera 22 positioned below it (see FIG. 12B). By then adjusting the characteristic values in the thickness direction T of the edge inspection apparatus 20 such that these pixel numbers are equal to each other, the edge inspection apparatus 20 can be calibrated such that it becomes possible to accurately photograph an image and detect a defect. Alternatively, by adjusting the sensitivity of the camera 21, or by adjusting the intensity of the illumination light, it becomes possible to consistently acquire images having the optimum contrast. Moreover, it becomes possible to quantitatively evaluate the relationships between the position in the thickness direction T, the shape, and the sizes of a pseudo-defect F and the detected number of pixels, and if a reference value for the number of pixels which sets the standard for a pass or fail determination is fixed based on these relationships and on the required detection accuracy, then, based on this reference value, it becomes possible to also accurately detect defects in which the position in the thickness direction T, the shape, or the sizes exceed a fixed standard.

The respective embodiments of the present invention have been described in detail above with reference made to the drawings, however, the specific structure of the present invention is not limited to these embodiments and various design modifications and the like may be included therein insofar as they do not depart from the spirit or scope of the present invention.

Note that in the first embodiment, the light emitting portion 3 and the light sensor 4 of the edge inspection apparatus 1 were given as examples of a subject to be adjusted in the adjustment step, while the camera 21 and illumination light source 22 where given as examples of a subject to be adjusted in the adjustment step in the second embodiment, however, the present invention is not limited to this. In the first embodiment, provided that the characteristic values have an effect on the intensity of the reflection light D, then calibration may be performed using a similar calibration method other than the above described method. In the same way, in the second embodiment, provided that the characteristic values have an effect on the detected number of pixels, then calibration is possible. Moreover, in the first embodiment, a device which detects the intensity of the reflection light D is used in the example, while, in the second embodiment, a photographic device which acquires an image by photographing an edge is used in the example, however, the present invention is not limited to this. Provided that it is at least possible to irradiate inspection light onto the edge W1 of the substrate for inspection W, and to detect the optical characteristics of the reflection light reflected by the edge W1, and to then detect whether or not a defect or the like is present in the edge W1 based on this, then it is possible to adjust and calibrate the characteristic values which have an effect on the optical characteristics of the reflection light detected by a similar type of method.

### INDUSTRIAL APPLICABILITY

It is possible to provide a calibration method for an edge inspection apparatus which makes it possible for an edge inspection apparatus which optically inspects an edge of a substrate to perform an inspection under optimum and uniform inspection conditions.

## Claims

1. A calibration method for an edge inspection apparatus which has: a light emitting portion which irradiates inspection light onto an edge of a substrate being inspected; and a detection portion which detects optical characteristics of reflection light which is reflected by the edge of the substrate being inspected to detect the defect occurring in the edge of the substrate being inspected based on the optical characteristics of the reflected light detected by the detection portion, the calibration method comprising:
a pseudo-defect formation step of forming a plurality of pseudo-defects on an edge of a substrate for calibration which serves as a reference along a circumferential direction thereof, in which at least one of a position in the thickness direction of the substrate, the shape, and the size is set so as to be different between the pseudo-defects;
a detection step of irradiating the inspection light onto the respective pseudo-defects, and detecting the optical characteristics of the reflection light by the detection portion; and
an adjustment step of calibrating the edge inspection apparatus based on the optical characteristics of the reflection light detected from the respective pseudo-defects.

2. The calibration method for an edge inspection apparatus according to claim 1, wherein
in the pseudo-defect formation step, the pseudo-defects are formed so as to have the same shape and size, and the pseudo-defects are at a center position in the thickness direction and positions offset from the center in both directions with respect to the thickness direction by predetermined amounts.

3. The calibration method for an edge inspection apparatus according to claim 1, wherein
in the pseudo-defect formation step, the pseudo-defects are formed so as to have the same position in the thickness direction, the same shape, and sizes which are sequentially varied by a predetermined amount or ratio.

4. The calibration method for an edge inspection apparatus according to claim 1, wherein
the detection portion of the edge inspection apparatus is a light sensor which detects an intensity of the reflection light as the optical characteristic, and
in the adjustment step, the characteristic values of the light emitting portion and the detection portion which have an effect on the intensity of the reflection light are adjusted by comparing the intensity of the reflection light in each of the pseudo-defects detected in the detection step with predetermined values.

5. The calibration method for an edge inspection apparatus according to claim 1, wherein
the detection portion of the edge inspection apparatus is a camera which photographs the edge of the substrate using the inspection light emitted from the light emitting source as illumination light, and
in the adjustment step, the characteristic values of the light emitting portion and the detection portion which have an effect on acquired image data are adjusted by mutually comparing with each other the number of pixels of portions where the respective pseudo-defects are formed in image data photographed in the detection step by the detection portion.

6. The calibration method for an edge inspection apparatus according to claim 1, wherein
in the adjustment step, a reference value for a pass or fail determination for the edge of the substrate being inspected is decided based on the optical characteristics of the reflection light in the respective pseudo-defects detected in the detection step.
